# EUROPÄISCHE PATENTSCHRIFT

(11) **EP 0 548 487 B1**
(45) Veröffentlichungstag und Bekanntmachung des Hinweises auf die Patenterteilung: **29.05.1996**
(21) Anmeldenummer: 92117800.0
(22) Anmeldetag: 19.10.1992
(51) Int. Cl.: G01B 7/16, G01B 5/30

(54) **Einrichtung zur Messung einer Verformung eines Bauteils**
Device for measuring a deformation of a work piece
Dispositif pour mesurer une déformation d'une pièce de construction

(30) Priorität: 21.12.1991 DE 4142671
(43) Veröffentlichungstag der Anmeldung: 30.06.1993
(73) Patentinhaber: WABCO STANDARD GmbH, D-53008 Bonn (DE)
(72) Erfinder: Feldmann, Joachim, W-3057 Neustadt 2 (DE); Stender, Axel, W-3250 Hameln 1 (DE)
(74) Vertreter: Schrödter, Manfred, Dipl.-Ing.

(56) Entgegenhaltungen:
- DE-A- 2 537 369
- DE-U- 7 732 095
- FR-A- 2 534 683
- GB-A- 2 030 300
- SOVIET INVENTIONS ILLUSTRATED Section EI, Week 8720, 27. Mai 1987 Derwent Publications Ltd., London, GB; Class S02, AN 87-142174;& SU-A-1260663 (MINE GEOMECH SURVEY) 30. September 1986.
- SOVIET PATENTS ABSTRACTS Section EI, Week 8907, 29. März 1989 Derwent Publications Ltd., London, GB; Class S02, AN 89-053118 & SU-A- 1 416 857 ( MOSC ENG PHYS INST ) 15 August 1988.

## Beschreibung

Die Erfindung betrifft eine Einrichtung zur Messung einer Verformung eines Bauteils gemäß dem Oberbegriff der Patentansprüche 1 und 4.

Eine derartige Einrichtung ist aus Figur 3 der DE-A-2 537 369 bekannt. In dieser stützt sich das Übertragungsglied einerseits so auf der Meßoberfläche des Sensors ab, daß dieser aus dem Übertragungsglied nur Zugkraft aufnehmen kann. Andererseits ist das Übertragungsglied in das Bauteil, dessen Verformung zu messen ist, eingeschraubt.

Aus der DE-U-7 732 095 ist eine Einrichtung zum Messen der Verformung eines Bauteils bekannt, in der das Übertragungsglied einerseits beim Auftreten einer Verformung des überwachten Bauteils mit Lücke einer eine Meßskala aufweisenden Stellschraube gegenübersteht und andererseits anstelle der aus der vorstehend gewürdigten DE-A-2 537 369 bekannten Schraubeinspannung für Zugkraft formschlüssig starr und für Druckkraft federnd eingespannt ist.

Der Erfindung liegt die Aufgabe zugrunde, eine Einrichtung der eingangs genannten Art zu anderen Lösungen fortzubilden.

Andere bekannte Einrichtungen setzen üblicherweise auf das Bauteil aufgeklebte oder anders befestigte (beispielsweise aufgespatterte) Meßelemente, z. B. auf der Basis von Dehnungsmeßstreifen, ein. Die Befestigung dieser Meßelemente muß mit großer Sorgfalt durchgeführt werden. Deshalb sind diese Einrichtungen aufwendig.

Diese Aufgabe wird durch die in den Patentansprüchen 1 und 4 angegebene Erfindung gelöst. Vorteilhafte Weiterbildungen und Ausgestaltungen sind in den abhängigen Ansprüchen angegeben.

Im Vergleich zu den oben erwähnten anderen bekannte Einrichtungen schafft die Erfindung mit einfachen Mitteln Lösungen, die mit geringerem Aufwand ausführbar sind.

Die Befestigung der meßelemente in bekannten Einrichtungen bietet trotz sorgfältiger Durchführung nicht immer die für den Dauerbetrieb von Serienerzeugnissen erforderliche Standfestigkeit. Diese Standfestigkeit bietet jedoch problemlos die Erfindung.

Der von der Erfindung vorgesehene Sensor ist von einer geläufigen Bauart, die häufig als Druck- oder Kraftsensor eingesetzt und bezeichnet wird. Ein derartiger Sensor ist beispielsweise in dem "Datenblatt für Druck-Sensor D9/D7" der Firma WIKA beschrieben.

Die Erfindung läßt sich auf allen technischen Gebieten einsetzen, in denen sich das von ihr angesprochene Problem stellt.

Die Erfindung gewährleistet ein von Temperatureinflüssen praktisch freies Meßergebnis, wenn für das Bauteil und das Übertragungsglied Werkstoffe mit gleichem thermischen Ausdehnungskoeffizienten, also beispielsweise für beide der gleiche Werkstoff, eingesetzt werden.

Weitere Vorteile der Erfindung ergeben sich aus deren nunmehr folgender Erläuterung anhand von zeichnerisch dargestellten Ausführungsbeispielen. Unter durchgehender Verwendung einheitlicher Bezugszeichen für Elemente mit gleichen Funktionen zeigen
- Figur 1: ein erstes grundsätzliches Ausführungsbeispiel,
- Figur 2: ein zweites grundsätzliches Ausführungsbeispiel,
- Figur 3 ) Figur 4 ): ein drittes grundsätzliches Ausführungsbeispiel,
- Figur 5: ein viertes grundsätzliches Ausführungsbeispiel,
- Figur 6 ) Figur 7 ): ein weiteres grundsätzliches Ausführungsbeispiel.
- Figur 8: ein Ausführungsbeispiel anhand eines Anwendungsfalls in einer Deichselkupplung,
- Figur 9: ein Ausführungsbeispiel anhand eines Anwendungsfalls in einer Sattelkupplung.

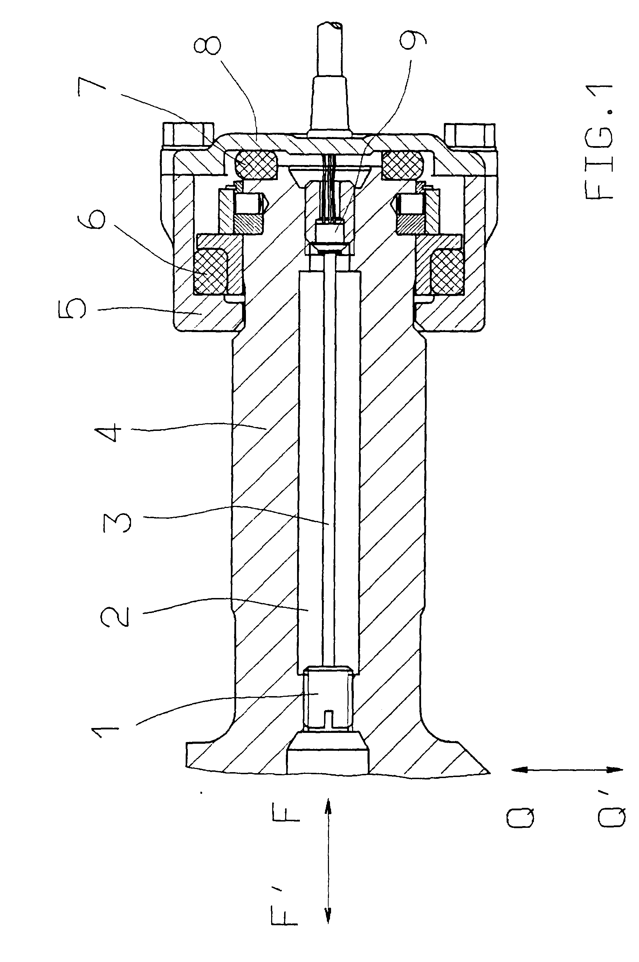

In Figur 1 ist ein Bauteil (4) auf beliebige und daher nicht näher beschriebene Weise in einer Struktur (5, 6, 7, 8) derart gelagert, daß das Bauteil (4) Kräfte und wenigstens Biegemomente aufnehmen kann.

Das Bauteil (4) weist eine innere, sich in seiner Längsrichtung erstreckende, Aussparung (2) auf. Die Aussparung (2) ist an ihren Enden verschlossen. An dem einen Ende erfolgt der Verschluß durch einen Sensor (9). Der Sensor (9) ist auf eine beliebige übliche und geeignete Weise in dem Bauteil (4) befestigt. Der Sensor (9) ist von einer Art, die eine Meßoberfläche besitzt und ein von der Verformung dieser Meßoberfläche abhängiges elektrisches Signal abgibt. Derartige Sensoren sind in zahlreichen Bauarten auf dem Markt erhältlich. Sie werden häufig als Druck- oder Kraftsensoren eingesetzt und bezeichnet.

In der Aussparung (2) ist ein Übertragungsglied (3) angeordnet, welches sich einerseits auf der Meßoberfläche des Sensors (9) und andererseits an dem anderen Ende der Aussparung (2) abstützt. Die seitliche Lage des Übertragungsgliedes (3) kann in nicht dargestellter Weise durch übliche Zentriermaßnahmen im Bereich der Enden der Aussparung (2) oder durch geeignete übliche Lagermaßnahmen in der Aussparung (2) fixiert sein.

Das Übertragungsglied (3) ist mittig zum Bauteil eingezeichnet, kann aber auch außermittig liegen.

Wird das Bauteil (4) durch Kräfte bzw. Kraftkomponenten in seiner Längsrichtung, wie sie durch dem Doppelpfeil F-F' angedeutet ist, belastet, so wird die daraus resultierende Abstandsänderung der Stützstellen des Übertragungsglieds (3) und damit eine Längenänderung des Bauteils (4) von dem Übertragungsglied (3) auf die Meßoberfläche des Sensors (9) übertragen, woraufhin diese verformt wird und der Sensor (9) ein entsprechendes elektrisches Signal abgibt. Dieses Signal, im folgenden Verformungssignal genannt, kann auch als die resultierende Kraft kennzeichnendes Kraftsignal ausgewertet werden.

In dem oben erwähnten Fall, daß das Übertragungsglied (3) und damit die Anordnung von Sensor (9) und Übertragungsglied (3) in dem Bauteil (4) außermittig angeordnet sind, ist das Ausführungsbeispiel auch zur Messung von Verformungen aus Kräften bzw. Kraftkomponenten in Querrichtung, wie sie durch den Doppelpfeil Q-Q' angedeutet ist, bzw. der Kräfte selbst und der entsprechenden Biegemomente geeignet. In diesem Fall liegen das Übertragungsglied (3) und der Sensor (9) außerhalb der neutralen Faser des Bauteils (4), so daß das Übertragungsglied (3) die seiner Lage im Bauteil (4) entsprechenden Längenänderungen aus diesen Kräften bzw. Biegemomenten auf den Sensor (9) überträgt.

Zur Ermöglichung von Messungen in beiden Richtungen des Doppelpfeils F-F' und/oder des Doppelpfeils Q-Q' ist es zweckmäßig, die Abstützung des Übertragungsgliedes (3) so vorzunehmen, daß es schon bei kräftefreiem Bauteil (4) den Sensor (9) vorspannt, das heißt konkret: dessen Meßoberfläche vorverformt. Der Sensor (9) liefert dann bei kräftefreiem Bauteil ein Grundsignal, welches nach Maßgabe der von dem Bauteil aufgenommenen Kräfte und/oder Biegemomente moduliert wird.

Eine Vorspannung des Sensors (9) kann auf vorteilhaft einfache Weise dadurch erzielt und einstellbar gemacht werden, daß das dem Sensor (9) gegenüberliegende Ende der Aussparung (2) durch einen Einschraubstopfen (1) verschlossen wird, auf dem sich das Übertragungsglied (3) an diesem Ende abstützt. Mittels des Schraubstutzens (1) kann die Lage des Übertragungsgliedes (3) relativ zu dem Sensor (9) und damit dessen Vorspannung eingestellt werden. Wenn auf den Vorteil der Einstellbarkeit verzichtet wird oder wenn dieser Vorteil anders erzielbar ist, kann der Verschluß des betreffenden Endes der Aussparung (2) auch auf jede andere Weise vorgenommen werden.

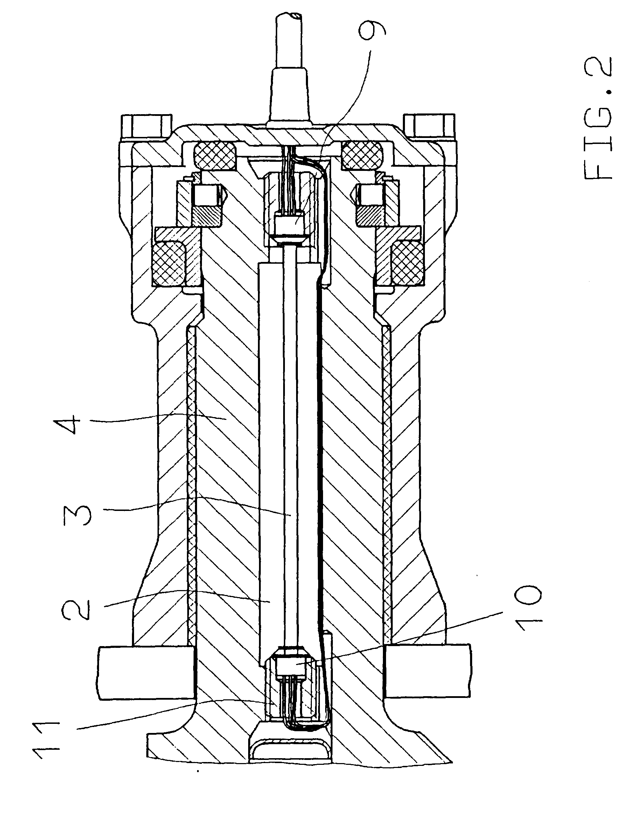

In dem Ausführungsbeispiel nach Figur 2 ist die Aussparung an dem dem Sensor (9) gegenüberliegenden Ende durch einen gleichartigen Sensor (10) verschlossen, auf dem sich an diesem Ende das Übertragungsglied (3) abstützt.

Aus den Verformungssignalen beider Sensoren (9, 10) können in diesem Fall durch Summierung eine Signalverstärkung oder durch Mittelung eine Signalmittelwertbildung gewonnen werden.

Der Sensor (10) ist in einem an dem betreffenden Ende der Aussparung (2) in das Bauteil (4) eingeschraubten Schraubstopfen (11) gelagert. Mittels des Schraubstopfens (11) ist eine Einstellung der Lage des Übertragungsglieds (3) relativ zu den Sensoren (9, 10) und damit die Erzielung und Einstellung einer Vorspannung beider Sensoren (9, 10) zu dem oben genannten Zweck möglich.

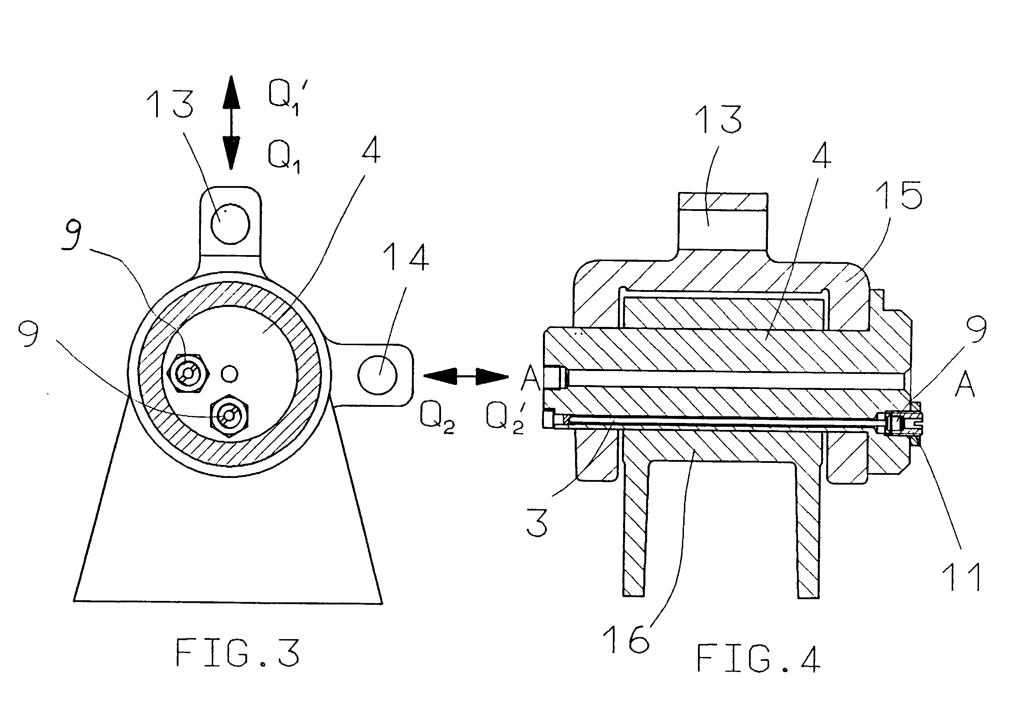

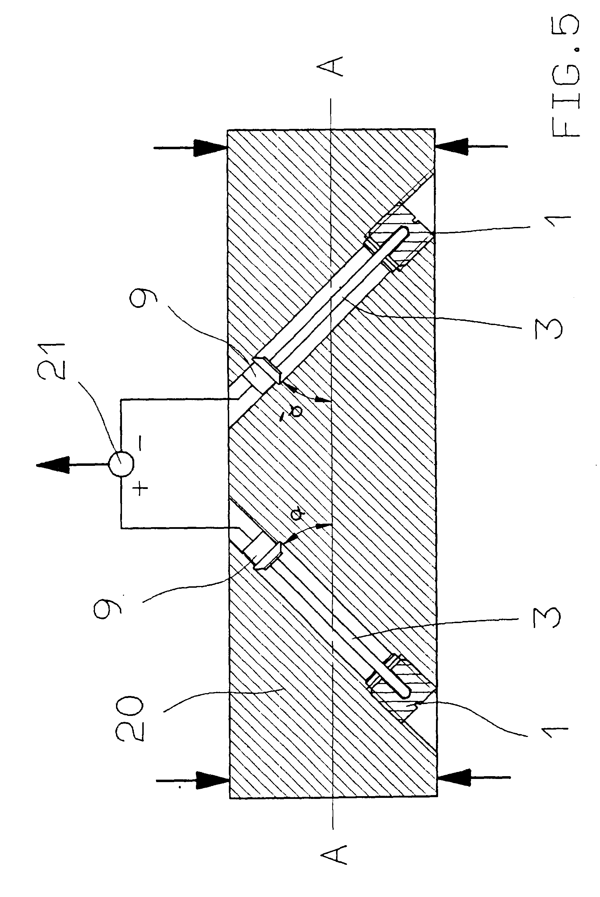

In dem Ausführungsbeispiel gemäß den Figuren 3 und 4 bilden das Bauteil (4) und Lagerteile (15, 16) ein Widerlager. Über Krafteinleitungsstellen (13, 14) in dem einen Lagerteil (15) werden, wie durch Doppelpfeile Q₁-Q'₁ und Q₂-Q₂' angedeutet ist, in aufeinander senkrechten Querrichtungen Kräfte in das Widerlager eingeleitet, welche das Bauteil (4) auf Biegung beanspruchen.

In dem Bauteil (4) sind zwei Anordnungen von Übertragungsgliedern (3) und Sensoren (9) ähnlich derjenigen nach Ausführungsbeispiel (1) untergebracht. Der Unterschied dieser Anordnungen zu derjenigen nach Ausführungsbeispiel 1 besteht darin, daß zur Erzielung und Einstellung der Vorspannung, der Sensor (9), wie der Sensor (10) des Ausführungsbeispiels nach Figur 2, in einem Schraubstopfen (11) gelagert ist und das gegenüberliegende Ende der Aussparung fest verschlossen ist.

Die Anordnungen von Übertragungsglied (3) und Sensor (9) liegen in dem Bauteil (4) außermittig um 90° versetzt nebeneinander, wobei die Übertragungsglieder (3) parallel zur Längsachse (AA) des Bauteils liegen, aber jeweils mittig zu einer der Querrichtungen Q₁-Q₁' und Q₂-Q₂'. Dadurch ist jede Anordnung von Übertragungsglied (3) und Sensor (9) nur für die Kraft in der Querrichtung wirksam, zu der sie mittig liegt.

Hinsichtlich der Kraft in der jeweils anderen Querrichtung liegt jede Anordnung in der neutralen Faser.

Bei Auswertung der Verformungssignale der Sensoren (9) als Kraftsignale ermöglicht diese Anordnung die Richtung der resultierenden Kraft bzw. der Ebene des resultierenden Biegemoments zu bestimmen. Umgekehrt ermöglicht diese Anordnung in Fällen, in denen eine Kraft oder eine resultierende Kraft in beliebiger Richtung oder ein Biegemoment in beliebiger Ebene auf das Bauteil (4) wirken, eine Bestimmung, von deren Komponenten in Richtung der Querrichtungen Q₁-Q₁' und Q₂-Q₂'.

In Figur 5 sind zwei Anordnungen von Sensoren (9) und Übertragungsgliedern (3) unter gleich großen Winkeln (α und α') zur Längsachse (AA) des hier mit (20) bezeichneten Bauteils, jedoch entgegengesetzt geneigt, in dem Bauteil (20) vorgesehen.

Dieses Ausführungsbeispiel ermöglicht die Messung von Schubspannungen, die durch Biegemomente in dem Bauteil (20) hervorgerufen werden. Die Verformungssignale beider Sensoren (9) werden einer schematisch angedeuteten Summiereinrichtung (21) zugeführt. Die Summiereinrichtung (21) hebt die von den Biegespannungen herrührenden Anteile der Verformungssignale gegeneinander auf und gibt die von den Schubspannungen herrührenden Anteile der Verformungssignale aus.

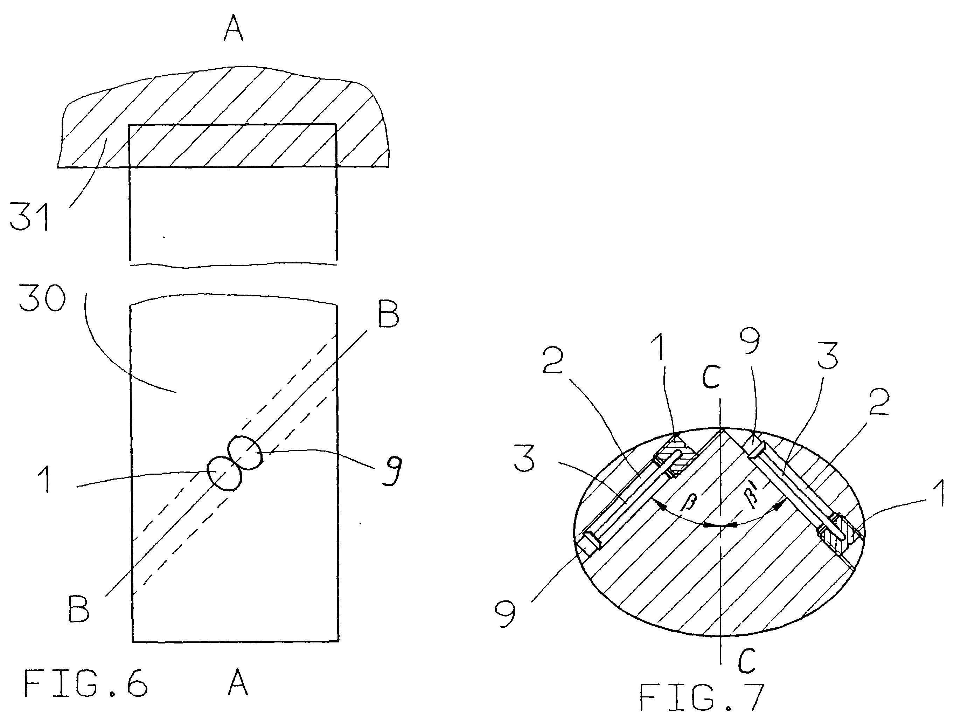

In dem Ausführungsbeispiel gemäß den Figuren 6 und 7 ist das in Figur 6 in Draufsicht gezeigte Bauteil (30) bei (31) drehfest eingespannt. In Figur 6 ist des weiteren eine zur Längsachse (AA) des Bauteils (30) geneigte Schnittlinie angegeben. Diese Schnittlinie ist die Durchdringungslinie (BB) einer senkrecht auf der Zeichnung stehenden Ebene.

Figur 7 zeigt den Schnitt durch das Bauteil (30) in der durch die Durchdringungslinie (BB) charakterisierten Ebene. Figur 7 läßt erkennen, daß in dieser Ebene zwei Anordnungen von Sensoren (9) und Übertragungsgliedern (3) untergebracht sind. Jede dieser Anordnungen ist unter einem gleich großen Winkel (β bzw. β)'zu einer Querachse (CC) des Bauteils (30), jedoch entgegengesetzt geneigt, angeordnet.

Bei dieser Anordnung liegen die Stützstellen des Übertragungsgliedes (3) in Querschnitten des Bauteils (30), die unter der Einwirkung von Drehmomenten unterschiedlich gedehnt werden. Die Dehnungsunterschiede in diesen Querschnitten übertragen die Übertragungsglieder (3) auf den jeweiligen Sensor (9). Die Verformungssignale der Sensoren (9) sind deshalb in diesem Ausführungsbeispiel besonders zur Messung der auf das Bauteil (30) wirkenden Drehmomente bzw. Drehkräfte geeignet.

Dieses Ausführungsbeispiel wirkt in der beschriebenen Weise auch, wenn nur eine Anordnung von Sensor (9) und Übertragungsglied (3) vorgesehen ist.

Im Ausführungsbeispiel schneidet die durch die Durchdringungslinie (BB) charakterisierte Ebene das Bauteil (30) und die Zeichnungsebene senkrecht. Dies muß nicht so sein. Die betreffende Ebene kann das Bauteil (30) und die Zeichnungsebene auch unter anderen Winkeln schneiden.

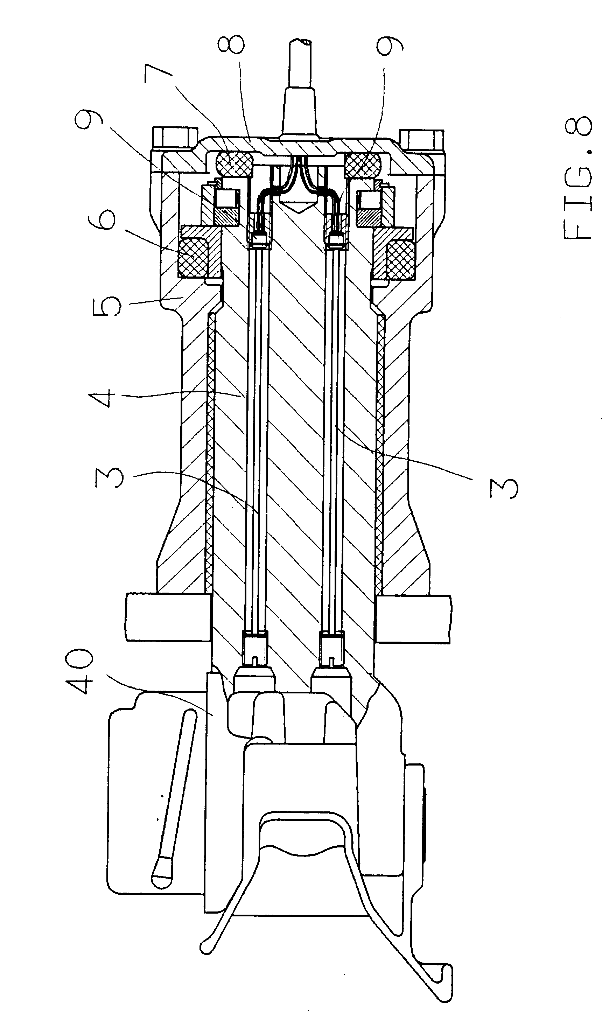

Das Ausführungsbeispiel gemäß Figur 8 zeigt als Anwendungsfall schematisch eine Deichselkupplung. Auf dem technischen Gebiet der Straßenfahrzeuge werden derartige Deichselkupplungen beispielsweise zur Verbindung eines Deichselanhängers mit einem Zugwagen eingesetzt.

Das Bauteil (4) ist in diesem Fall fest mit einem Zugmaul (40) verbunden und überträgt die von diesem ausgehenden Kräfte auf die Struktur (5, 6, 7, 8), die in diesem Fall als Bestandteil des Zugwagens anzusehen ist. Zur Minderung von Stößen bestehen normalerweise einige Bestandteile (6, 7) dieser Struktur aus Elastomer.

In dem Bauteil (4) sind außermittig zwei Anordnungen von Sensoren (9) und Übertragungsgliedern (3) gemäß dem Ausführungsbeispiel nach Figur 1 untergebracht. Das Verformungssignal wird in diesem Fall als Kraftsignal ausgewertet, welches die resultierende Deichselkraft bzw. das resultierende Deichsel-Biegemoment kennzeichnet.

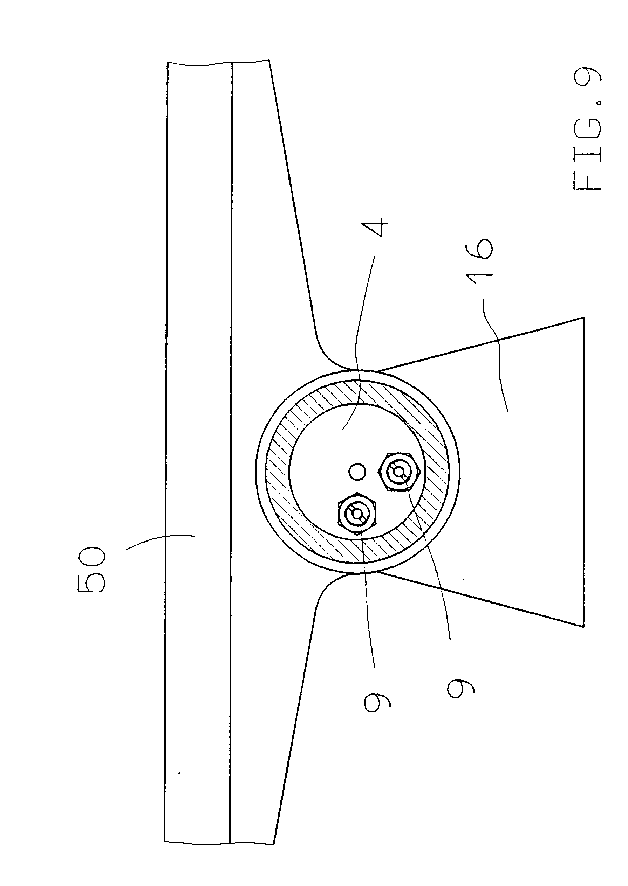

Das Ausführungsbeispiel gemäß Figur 9 zeigt als Anwendungsfall schematisch eine Sattelkupplung. Auf dem technischen.Gebiet der Straßenfahrzeuge wird eine solche Sattelkupplung auf dem Zugfahrzeug zur Verbindung desselben mit einem Sattelanhänger eingesetzt.

Dieses Ausführungsbeispiel entspricht demjenigen gemäß den Figuren 3 und 4. Das dort die Krafteinleitungsstellen (13) und (14) aufweisende eine Lagerteil (15) ist hier zu einer Kupplungsplatte (50) fortgebildet bzw. mit einer solchen fest verbunden.

In diesem Anwendungsfall überträgt die Sattelplatte (50) auf das Bauteil (4) eine resultierende Kraft bzw. ein resultierendes Biegemoment, deren bzw. dessen Komponenten in den Querrichtungen Q₁-Q₁' und Q₂-Q₂' die Anordnungen von Verformungssensor (9) und Übertragungsglied (3) ermitteln. Diese Ermittlung ist erforderlich, weil die Komponenten zu unterschiedlichen Zwecken ausgewertet werden. Die Komponente in senkrechter Richtung Q₁-Q₁' kann beispielsweise zur lastabhängigen Bremsdruckregelung, die Komponente in waagerechter Richtung Q₂-Q₂' kann beispielsweise zur sogenannten Koppelkraftregelung ausgewertet werden.

Soweit sich aus den vorstehenden Ausführungen nichts Widersprechendes ergibt, gelten die zu einem Ausführungsbeispiel gegebenen Erläuterungen für die anderen Ausführungsbeispiele direkt oder in entsprechender Anwendung mit. Auch können die Ausführungsbeispiele bzw. die aus ihnen hervorgehenden Prinzipien der Erfindung kombiniert eingesetzt werden.

Der Fachmann erkennt, daß der Schutzbereich der vorliegenden Erfindung durch die Ausführungsbeispiele nicht erschöpfend beschrieben wird, sondern alle Ausgestaltungen umfaßt, deren Merkmale sich den Patentansprüchen unterordnen.

## Patentansprüche

1. Einrichtung zur Messung einer Verformung eines Bauteils (4; 30) mit einem in dem Bauteil (4; 30) angeordneten Sensor (9), der eine Meßoberfläche aufweist und ein von einer Verformung der Meßoberfläche abhängiges elektrisches Signal abgibt, ferner mit einem in dem Bauteil angeordneten und sich einerseits auf der Meßoberfläche des Sensors (9) abstützenden Übertragungsglied (3),
dadurch gekennzeichnet,
daß das Übertragungsglied (3) sich andererseits an dem Bauteil (4; 30) abstützt und daß beide Abstützungen gegenüber dem Übertragungsglied (3) druckkraftaufnehmend sind.

2. Einrichtung nach Anspruch 1, dadurch gekennzeichnet, daß die Lage des Übertragungsgliedes (3) relativ zu dem Sensor (9) einstellbar ist.

3. Einrichtung nach einem der Ansprüche 1 oder 2,
dadurch gekennzeichnet, daß in dem Bauteil (4; 30) wenigstens zwei Anordnungen von Sensor (9) und Übertragungsglied (3) nach Anspruch 1 vorgesehen sind.

4. Einrichtung zur Messung einer Verformung eines Bauteils (4; 30) mit einem in dem Bauteil (4; 30) angeordneten Sensor (9), der eine Meßoberfläche aufweist und ein von einer Verformung der Meßoberfläche abhängiges elektrisches Signal abgibt, ferner mit einem in dem Bauteil angeordneten und sich einerseits auf der Meßoberfläche des Sensors (9) abstützenden Übertragungsglied (3),
dadurch gekennzeichnet,
daß sich das Übertragungsglied (3) andererseits auf der Meßoberfläche eines zweiten Sensors (10) abstützt, der ein von einer Verformung der Meßoberfläche abhängiges Signal abgibt, und beide Abstützungen gegenüber dem Übertragungsglied (3) druckkraftaufnehmend sind.

5. Einrichtung nach Anspruch 4, dadurch gekennzeichnet, daß die Lage des Übertragungsgliedes (3) relativ zu den Sensoren (9, 10) einstellbar ist.

6. Einrichtung nach einem der Ansprüche 4 oder 5,
dadurch gekennzeichnet, daß in dem Bauteil (4) wenigstens zwei Anordnungen von Sensoren (9) und Übertragungsgliedern (3) nach Anspruch 4 vorgesehen sind.

7. Einrichtung nach einem der Ansprüche 3 oder 6,
dadurch gekennzeichnet, daß zwei Anordnungen von Sensoren (9) und Übertragungsgliedern (3) unter gleich großen Winkeln (α, α') zur Längsachse (AA) des Bauteils (20), jedoch entgegengesetzt geneigt, in dem Bauteil (20) vorgesehen sind.

8. Einrichtung nach einem der Ansprüche 1 bis 2 oder 4 bis 5, dadurch gekennzeichnet, daß die Anordnung von Sensor (9) und Übertragungsglied (3) in einer zur Längsachse (AA) des Bauteils (30) geneigten Ebene (Durchdringungslinie BB) unter einem Winkel (β) zur Querachse (CC) des Bauteils (30) angeordnet ist.

9. Einrichtung nach einem der Ansprüche 3 oder 6,
dadurch gekennzeichnet, daß zwei Anordnungen von Sensoren (9) und Übertragungsgliedern (3) in einer zur Längsachse (AA) des Bauteils (30) geneigten Ebene (Durchdringungslinie BB) unter gleich großen Winkeln (β, β') zu einer Querachse (CC) des Bauteils (30), jedoch entgegengesetzt geneigt, angeordnet sind.

10. Einrichtung nach einem der Ansprüche 3 oder 6, dadurch gekennzeichnet, daß außermittig in dem Bauteil um 90° versetzt nebeneinander zwei Anordnungen von Sensoren (9) und Übertragungsgliedern (3) vorgesehen sind, wobei die Übertragungsglieder (3) parallel zur Längsachse (AA) des Bauteils liegen.

## Claims

1. Device for measuring deformation of a structural member (4; 30) having a sensor (9) which is arranged in the structural member (4; 30) and has a measuring surface and which emits an electrical signal dependent on a deformation of the measuring surface, and also having a transfer element (3) arranged in the structural member and being at one end supported on the measuring surface of the sensor (9),
characterised in that
the transfer element (3) is at the other end supported against the structural member (4; 30) and the two supports are arranged to receive compression forces from the transfer element (3).

2. Device according to claim 1, characterised in that the position of the transfer element (3) can be adjusted relative to the sensor (9).

3. Device according to either one of claims 1 and 2, characterised in that there are provided in the structural member (4; 30) at least two installations of sensor (9) and transfer element (3) according to claim 1.

4. Device for measuring deformation of a structural member (4; 30) having a sensor (9) which is arranged in the structural member (4; 30) and has a measuring surface and which emits an electrical signal dependent on a deformation of the measuring surface, and also having a transfer element (3) arranged in the structural member and being at one end supported on the measuring surface of the sensor (9),
characterised in that
the transfer element (3) is at the other end supported on the measuring surface of a second sensor (10), which emits a signal dependent on a deformation of the measuring surface, and the two supports are arranged to receive compression forces from the transfer element (3).

5. Device according to claim 4, characterised in that the position of the transfer element (3) can be adjusted relative to the sensors (9, 10).

6. Device according to either one of claims 4 and 5, characterised in that there are provided in the structural member (4) at least two installations of sensors (9) and transfer elements (3) according to claim 4.

7. Device according to either one of claims 3 and 6, characterised in that there are provided in the structural member (20) two installations of sensors (9) and transfer elements (3) at equal angles (α, α') to the longitudinal axis (AA) of the structural member (20), but inclined in opposite directions.

8. Device according to any one of claims 1 to 2 or 4 to 5, characterised in that the installation of sensor (9) and transfer element (3) is arranged in a plane (cutting line BB) that is inclined with respect to the longitudinal axis (AA) of the structural member (30), at an angle (β) to the transverse axis (CC) of the structural member (30).

9. Device according to either one of claims 3 and 6, characterised in that two installations of sensors (9) and transfer elements (3) are arranged in a plane (cutting line BB) that is inclined with respect to the longitudinal axis (AA) of the structural member (30), at equal angles (β, β') to a transverse axis (CC) of the structural member (30), but inclined in opposite directions.

10. Device according to either one of claims 3 and 6, characterised in that two installations of sensors (9) and transfer elements (3) are provided in the structural member, off-centre and displaced by 90° relative to one another, the transfer elements (3) lying parallel to the longitudinal axis (AA) of the structural member.

## Revendications

1. Dispositif pour mesurer la déformation d'un composant (4 ; 30) comportant un palpeur (9) qui est agencé dans le composant (4 ; 30) et présente une surface de mesure, et qui envoie un signal électrique dépendant d'une déformation de la surface de mesure, comportant en outre un organe de transmission (3) agencé dans le composant et s'appuyant d'un côté sur la surface de mesure du palpeur (9), caractérisé en ce que l'organe de transmission (3) s'appuie de l'autre côté sur le composant (4 ; 30), et en ce que les deux appuis encaissent des forces de pression par rapport à l'organe de transmission (3).

2. Dispositif selon la revendication 1, caractérisé en ce que la position de l'organe de transmission (3) est réglable par rapport au palpeur (9).

3. Dispositif selon l'une ou l'autre des revendications 1 et 2, caractérisé en ce qu'il est prévu dans le composant (4 ; 30) au moins deux agencements formés d'un palpeur (9) et d'un organe de transmission (3) selon la revendication 1.

4. Dispositif pour mesurer la déformation d'un composant (4 ; 30) comportant un palpeur (9) qui est agencé dans le composant (4 ; 30) et présente une surface de mesure, et qui envoie un signal électrique dépendant d'une déformation de la surface de mesure, comportant en outre un organe de transmission (3) agencé dans le composant et s'appuyant d'un côté sur la surface de mesure du palpeur (9), caractérisé en ce que l'organe de transmission (3) s'appuie de l'autre côté sur la surface de mesure d'un second palpeur (10) qui envoie un signal dépendant de la déformation de la surface de mesure, et en ce que les deux appuis encaissent des forces de pression par rapport à l'organe de transmission (3).

5. Dispositif selon la revendication 4, caractérisé en ce que la position de l'organe de transmission (3) est réglable par rapport aux palpeurs (9, 10).

6. Dispositif selon l'une ou l'autre des revendications 4 et 5, caractérisé en ce qu'il est prévu dans le composant (4) au moins deux agencements formés d'un palpeur (9) et d'un organe de transmission (3) selon la revendication 4.

7. Dispositif selon l'une ou l'autre des revendications 3 et 6, caractérisé en ce qu'il est prévu dans le composant (20) deux agencements formés d'un palpeur (9) et d'un organe de transmission (3), sous des angles égaux (α, α') par rapport à l'axe longitudinal (AA) du composant (20), mais en sens opposé.

8. Dispositif selon l'une quelconque des revendications 1 et 2 ou 4 et 5, caractérisé en ce que l'agencement formé du palpeur (9) et de l'organe de transmission (3) est agencé dans un plan (ligne de pénétration BB) incliné par rapport à l'axe longitudinal (AA) du composant (30), sous un angle (β) par rapport à l'axe transversal (CC) du composant (30).

9. Dispositif selon l'une ou l'autre des revendications 3 et 6, caractérisé en ce que deux agencements formés d'un palpeur (9) et d'un organe de transmission (3) sont agencés dans un plan (ligne de pénétration BB) incliné par rapport à l'axe longitudinal (AA) du composant (30), sous des angles égaux (β, β') par rapport à un axe transversal (CC) du composant (30), mais en sens opposé.

10. Dispositif selon l'une ou l'autre des revendications 3 et 6, caractérisé en ce qu'il est prévu dans le composant en dehors du centre et de façon décalée de 90° l'un à côté de l'autre deux agencements formés d'un palpeur (9) et d'un organe de transmission (3), les organes de transmission (3) étant situés parallèlement à l'axe longitudinal (AA) du composant.
